# EUROPÄISCHE PATENTANMELDUNG

(11) **EP 1 795 432 A1**
(43) Veröffentlichungstag der Anmeldung: **13.06.2007**
(21) Anmeldenummer: 06025064.4
(22) Anmeldetag: 05.12.2006
(51) Int. Cl.: B62D 5/04

(54) **Antrieb für Flurförderfahrzeuge**

(30) Priorität: 09.12.2005 DE 102005058942
(71) Anmelder: ZF FRIEDRICHSHAFEN AG, 88038 Friedrichshafen (DE)
(72) Erfinder: Scharfenberg, Stephan, 99869 Tüttleben (DE); Stübner, Frank, 99894 Ernstroda (DE); Bald, Dirk, 99876 Gotha (DE)

(57) **Zusammenfassung**

Es wird ein Antrieb für Flurförderfahrzeuge, insbesondere für Handhubwagen vorgeschlagen, umfassend einen Lenkmotor (2), ein Lenkgetriebe (3) und einen lenkbaren Antrieb (1), in den der Fahrmotor, das Fahrgetriebe (5) und die Bremse integriert sind, bei dem der Lenkmotor (2), das Lenkgetriebe (3) und der lenkbare Antrieb (1) in der Reihenfolge lenkbarer Antrieb (1), Lenkgetriebe (3), Lenkmotor (2) vertikal übereinander angeordnet sind.

## Beschreibung

Die vorliegende Erfindung betrifft einen Antrieb für Flurförderfahrzeuge, insbesondere für Handhubwagen, umfassend einen Lenkmotor, ein Lenkgetriebe und einen lenkbaren Antrieb, gemäß dem Oberbegriff des Patentanspruchs 1.

Handhubwagen sind zum Anheben, Transportieren und Absetzen von Lasten geeignet, die üblicherweise auf Paletten angeordnet sind. Sie umfassen eine Gabel mit zwei Zinken und sind in der Regel im Kopfbereich mit einer mittels einer Deichsel schwenkbaren Antriebseinheit versehen.

Aus der DE 102 04 915 A1 ist eine Antriebseinheit für ein Fahrzeug bekannt, insbesondere ein Hilfsantrieb für einen Handhubwagen im Flurförderfahrzeugbereich, mit einer Nabe aus einem Gehäuseträger, einer Steuervorrichtung, einem Abtriebsglied, einem Elektromotor, einem Stirnradgetriebe, einer Park- und Betriebsbremse, einer Radlagerung, einem Laufrad auf der Nabe und einer Lenkanbindung. Das Abtriebsglied ist mit dem anzutreibenden Rad koaxial zu dem Elektromotor auf der Nabe angeordnet.

Die aus dem Stand der Technik bekannten Konstruktionen für Handhubwagen mit Verwendung eines Stirnradgetriebes bestehen aus Getriebe, integriertem Fahrmotor, Laufrad, Rahmenplatte, Bremse, Sensorik und eventuell seitlich versetztem Lenkmotor mit Lenkgetriebe oder Deichsel; in nachteiliger Weise ist der Bauraumbedarf hoch, wobei die Komponenten eine geringe Komplexität aufweisen.

Der vorliegenden Erfindung liegt die Aufgabe zugrunde, einen Antrieb für Flurförderfahrzeuge, insbesondere für Handhubwagen anzugeben, bei dem der erforderliche Bauraum und die Herstellungskosten reduziert werden; des weiteren soll eine hohe integration aller notwendigen Komponenten erzielt werden. Ein weiteres Ziel der Erfindung ist es, den erfindungsgemäßen Antrieb weitgehend wartungsarm bzw. wartungsfrei zu gestalten.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Antrieb für Flurförderfahrzeuge, insbesondere für Handhubwagen, vorgeschlagen, umfassend einen Lenkmotor, ein Lenkgetriebe und einen lenkbaren Antrieb, in dem der Fahrmotor, das Fahrgetriebe und die Bremse integriert sind, bei dem der Lenkmotor, das Lenkgetriebe und der lenkbare Antrieb in der Reihenfolge lenkbarer Antrieb, Lenkgetriebe, Lenkmotor vertikal übereinander angeordnet sind.

Gemäß einer bevorzugten Ausführungsform der Erfindung ist das Lenkgetriebe als hochuntersetzendes koaxiales Getriebe, beispielsweise als Planetengetriebe, Wolfromgetriebe, Cyclo-Getriebe oder Wellgetriebe ausgeführt. Besonders vorteilhaft ist es, wenn das Lenkgetriebe wartungsarm bzw. wartungsfrei ausgebildet ist, was durch eine Lebensdauerschmierung des Lenkgetriebes erreicht werden kann.

Das Fahrgetriebe kann gemäß der Erfindung als Planetengetriebe, Stirnradgetriebe, Kegeistirnradgetriebe oder auch als Schneckengetriebe ausgebildet sein.

Des weiteren wird erfindungsgemäß vorgeschlagen, als Lenkmotor einen bürstenlosen AC- oder DC-Motor in Standard- oder Scheibenläuferausführung zu verwenden, wodurch die Wartungsfreiheit gewährleistet ist.

Gemäß einer vorteilhaften Weiterbildung der Erfindung erfolgt der Abtrieb des Lenkgetriebes über ein Drehkranzlager (integriertes Hohlrad). Des weiteren ist die Motorwelle des Lenkmotors als Hohlwelle zur Durchführung der erforderlichen Kabel für Fahrmotor und Bremse ausgebildet.

Die Erfindung wird im Folgenden anhand der beigefügten Figuren beispielhaft näher erläutert.

Es zeigen:
- Figur 1: eine schematische Schnittansicht einer bevorzugten Ausführungsform der Erfindung und
- Figur 2: eine schematische Schnittansicht einer weiteren bevorzugten Ausführungsform der Erfindung.

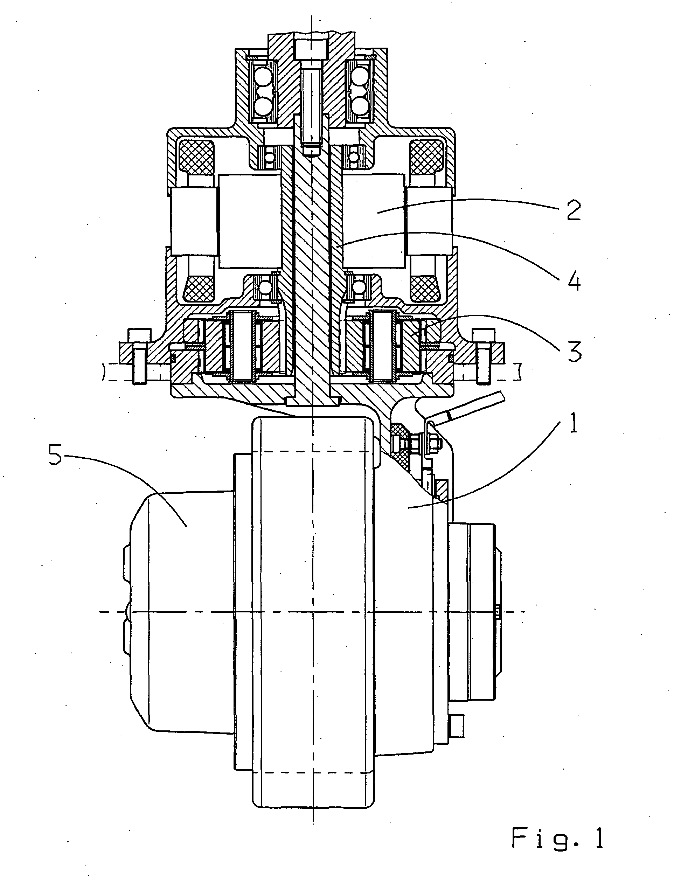

Gemäß Figur 1 umfasst der Handhubwagen einen lenkbaren Antrieb 1, in den der Fahrmotor, das Fahrgetriebe und die Bremse integriert sind. Des weiteren ist ein Lenkmotor 2 vorgesehen, welcher über ein Lenkgetriebe 3 die Lenkbewegung überträgt, wobei das Lenkgetriebe 3 zwischen dem lenkbaren Antrieb 1 und dem Lenkmotor 2 angeordnet ist. Der Lenkmotor 2 und das Lenkgetriebe 3 sind demnach im Wesentlichen oberhalb des lenkbaren Antriebs 1 (d.h. vertikal) angeordnet, so dass sich die Reihenfolge lenkbarer Antrieb 1, Lenkgetriebe 3, Lenkmotor 2 ergibt.

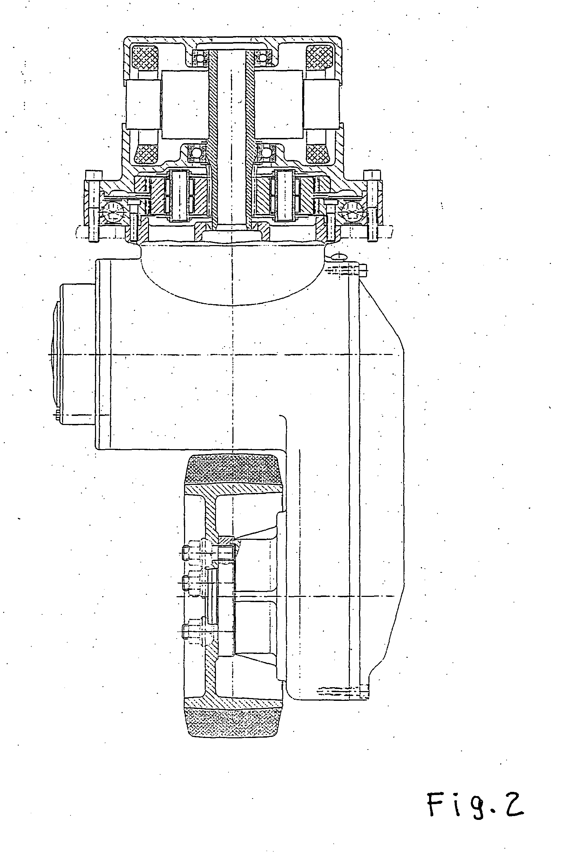

Wie bereits erläutert, ist das Lenkgetriebe 2 als hochuntersetzendes koaxiales Getriebe, beispielsweise als Planetengetriebe, Wolfromgetriebe, Cyclo-Getriebe oder Wellgetriebe ausgeführt. Die Motorwelle 4 des Lenkmotors 2 ist als Hohlwelle ausgeführt und dient bei Figur 2 als Kabeldurchführung für die erforderlichen Anschlusskabel des lenkbaren Antriebs 1, insbesondere der Anschlusskabel von Fahrmotor und Bremse. Bei der in Figur 1 gezeigten Ausführungsform ist das Fahrgetriebe 5 als Planetengetriebe ausgebildet, was in einer kompakten Bauweise resultiert.

Das Ausführungsbeispiel gemäß Figur 2 unterscheidet sich von dem Ausführungsbeispiel nach Figur 1 dadurch, dass das Fahrgetriebe 5 als Stirnradgetriebe ausgebildet ist.

Selbstverständlich fällt auch jede konstruktive Ausbildung, insbesondere jede räumliche Anordnung der Komponenten des erfindungsgemäßen Antriebs an sich sowie zueinander und soweit technisch sinnvoll, unter den Schutzumfang der vorliegenden Ansprüche, ohne die Funktion des Antriebs, wie sie in den Ansprüchen angegeben ist, zu beeinflussen, auch wenn diese Ausbildungen nicht explizit in den Figuren oder in der Beschreibung dargestellt sind.

### Bezugszeichen

- 1: lenkbarer Antrieb
- 2: Lenkmotor
- 3: Lenkgetriebe
- 4: Motorwelle des Lenkmotors
- 5: Fahrgetriebe

## Patentansprüche

1. Antrieb für Flurförderfahrzeuge, insbesondere für Handhubwagen, umfassend einen Lenkmotor, ein Lenkgetriebe und einen lenkbaren Antrieb, in dem der Fahrmotor, das Fahrgetriebe und die Bremse integriert sind, **dadurch gekennzeichnet, dass** der Lenkmotor (2), das Lenkgetriebe (3) und der lenkbare Antrieb in der Reihenfolge lenkbarer Antrieb (1), Lenkgetriebe (3), Lenkmotor (2) vertikal übereinander angeordnet sind.

2. Antrieb für Flurförderfahrzeuge nach Anspruch 1, **dadurch gekennzeichnet, dass** das Lenkgetriebe (3) als hochuntersetzendes koaxiales Getriebe ausgeführt ist.

3. Antrieb für Flurförderfahrzeuge nach Anspruch 2, **dadurch gekennzeichnet, dass** das Lenkgetriebe (3) als Planetengetriebe, Wolfromgetriebe, Cyclo-Getriebe oder Wellgetriebe ausgeführt ist.

4. Antrieb für Flurförderfahrzeuge nach Anspruch 1, 2 oder 3, **dadurch gekennzeichnet, dass** die Motorwelle (4) des Lenkmotors (2) als Hohlwelle ausgeführt ist und als Kabeldurchführung für die erforderlichen Anschlusskabel des lenkbaren Antriebs (1) dient.

5. Antrieb für Flurförderfahrzeuge nach einem der vorangehenden Ansprüche, **dadurch gekennzeichnet, dass** der Lenkmotor (2) ein bürstenloser AC- oder DC-Motor in Standard- oder Scheibenläuferausführung ist.

6. Antrieb für Flurförderfahrzeuge nach einem der vorangehenden Ansprüche, **dadurch gekennzeichnet, dass** der Abtrieb des Lenkgetriebes (3) über eine Lagerung, beispielsweise ein Drehkranzlager oder ein Vierpunktlager, Kegelrollenlager, Kreuzrollenlager, erfolgt.

7. Antrieb für Flurförderfahrzeuge nach einem der vorangehenden Ansprüche, **dadurch gekennzeichnet, dass** das Fahrgetriebe (5) als Planetengetriebe, Stirnradgetriebe, Kegeistirnradgetriebe oder als Schneckengetriebe ausgebildet ist.
